# EUROPEAN PATENT SPECIFICATION

(11) **EP 4 756 704 B1**
(45) Date of publication and mention of the grant of the patent: **21.10.2026**
(21) Application number: 25200271.2
(22) Date of filing: 04.09.2025
(51) Int. Cl.: G06T 3/18

(54) **SYSTEM AND METHOD FOR REAL-TIME MULTI-PLANAR IMAGE PROCESSING WITH DEPTH ESTIMATION AND IMAGE SYNTHESIS**
SYSTEM UND VERFAHREN ZUR MULTIPLANAREN ECHTZEIT-BILDVERARBEITUNG MIT TIEFENSCHÄTZUNG UND BILDSYNTHESE
SYSTÈME ET PROCÉDÉ DE TRAITEMENT D'IMAGE MULTIPLANAIRE EN TEMPS RÉEL AVEC ESTIMATION DE PROFONDEUR ET SYNTHÈSE D'IMAGE

(30) Priority: 03.12.2024 NO 20241195
(43) Date of publication of application: 10.06.2026
(73) Proprietor: MUYBRIDGE AS, 0459 Oslo (NO)
(72) Inventor: VESTAD, Vegard Nitter, N-0650 Oslo (NO)
(74) Representative: Acapo Onsagers AS

(56) References cited:
- US-A1- 2023 123 532
- ZHAO TONG ET AL: "Depth-aware Volume Attention for Texture-less Stereo Matching", ARXIV.ORG, 1 February 2024 (2024-02-01), pages 1 - 10, XP093362747, Retrieved from the Internet <URL:https://arxiv.org/pdf/2402.08931>

## Description

### TECHNICAL FIELD

The present application relates to the field of image processing, and more specifically to the processing and transmission of multi-planar images in real-time video communication systems. It addresses challenges associated with managing high-dimensional data, ensuring efficient transmission, and providing high-quality output when multiple camera sensors are used.

### BACKGROUND

In image processing, multi-planar images, MPI, refer to a method of image representation where image data is stored or processed across multiple planes or channels, each containing distinct types of information about the image. A well-known example of this is RGB images, where the Red, Green, and Blue channels each form separate planes, collectively contributing to a complete color image. However, the concept of multi-planar images extends far beyond simple RGB representations, particularly in fields like medical imaging, 3D reconstruction, and computer vision. In these domains, multi-planar images are often used to preserve and represent perspective across multiple depths, defined by multiple layers of data. This technique has roots in the classical animation industry, where technologies like Disney's MultiPlane Camera were developed to create a parallax effect, giving the illusion of depth by moving background layers more slowly than foreground layers.

The use of multi-planar images in real-time video communication presents unique challenges, especially when large volumes of data are sourced from multiple camera sensors. Managing the complexities of high-dimensional data, processing this data in real-time, and ensuring efficient transmission over networks are critical hurdles. For instance, in RGB-D imaging, where color, RGB, and depth, D, planes are combined, processing in real-time requires significant computational resources. These challenges are amplified when integrating data from multiple camera sensors, such as those capturing different angles or viewpoints. The fusion of data from these planes must be performed efficiently to avoid misinterpretations such as spatial misalignments, depth inaccuracies, or the introduction of visual artifacts in the final video output. Note that MPI and RGB-D are two different representations. RGB-D is a single image with 4 channels, basically RGB with depth map. MPI is a stack of RGB images. RGB-D is cheap to work with, while MPI is expensive (imagine working with 32 x 4K images, all the compute and memory you would need). However, what to be gained by working with the more expensive MPI format is being able to represent how objects look behind other objects, which you cannot be represent using RGB-D. So this is the appeal of MPI, being able to do view synethesis by just shifting around on the layers. However, making a MPI in a real-time manner has proven very difficult, and there has been multiple attempts using e.g. Artificial Intelligence, AI. This is where the method disclosed herein comes into the story. The method makes it possible to do the view synthesis using the concept of MPI, but by skipping the intermediate MPI representation, a lot of compute is saved, and it may be possible to do it in real-time.

Errors in depth estimation present a particular challenge in the processing of multi-planar images. Inaccuracies in depth information can result in depth discontinuities or incorrect spatial relationships between objects in the scene, distorting the overall perception. This could lead to problems such as improper rendering of 3D structures, unrealistic spatial arrangements, and jagged edges caused by insufficient depth data, undermining the effectiveness of the multi-planar approach in video communications.

Therefore, there exists a need for improved methods and systems for implementing multi-planar images in real-time video communication, particularly in the context of managing data from multiple sensors. Such advancements would address the issues of computational efficiency, data fusion, and depth accuracy, ultimately improving the quality of video communication using multi-planar imaging techniques.

Therefore, there is a need for a system solving the camera related problems discussed above in various fields and applications, and a need for a system that optimizes the use of multi-planar images in real-time applications, overcoming the limitations of depth estimation, data fusion, and image quality.

### SUMMARY

In view of the above, an object of the present disclosure is to overcome or at least mitigate at least some of the drawbacks related to cameras. In particular, the present application discloses a method for real-time image processing using multi-planar images in a multiple camera system including the steps of downscaling and grayscaling input images to reduce computational load, estimating a target-centered depth map by sweeping multiple layers of depth across input images to form a plane sweep volume, PSV, comparing corresponding layers of the PSV to generate a similarity volume, and selecting depth values for each pixel based on the similarity volume, warping source images to a target viewpoint based on the estimated depth map and blending warped images to generate a synthesized target image. A system corresponding to the above discussed method is also disclosed.

### BRIEF DESCRIPTION OF THE DRAWINGS

Figure 1 illustrates the references to "source" and "target" in the specification herein,
Figures 2 is a flow chart illustrating the main steps according to an example embodiment related to the present application,
Figure 3 is a flow chart illustrating one of the main steps according to an example embodiment related to the present application,
Figure 4 is a flow chart illustrating a Laplacian pyramid similarity comparison process according to one embodiment of the present invention.

### DETAILED DESCRIPTION

The different aspects of the present invention are solving certain problems related to MPI implementation.

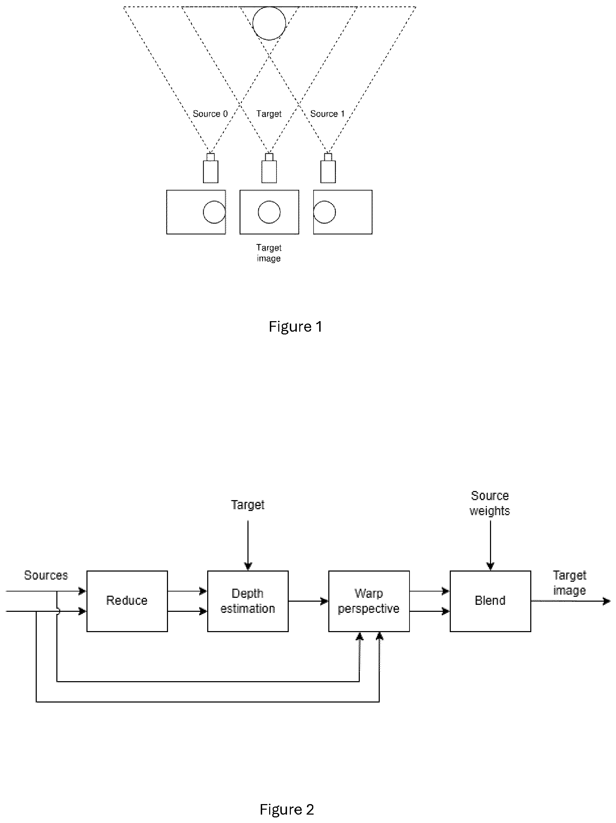

The present invention relates to an efficient method for real-time image processing using multi-planar images, MPI, as illustrated in Figures 2, 3, and 4. The core concept of the invention is to assign each pixel to one of several layers (n layers) based on its depth, such that background pixels are assigned to background layers and foreground pixels to foreground layers. This method produces a stack of images, one for each depth layer, which can then be transformed to create 3D effects via 2D transformations applied to each layer.

The core idea according to the present patent application, is that for each pixel, the method finds which of the n layers this pixel belongs to the most. E.g. a background pixel should belong to a background layer, and a foreground pixel should belong to a foreground layer. This results in a stack of images for each depth to which 2D transformations can be applied in order to create 3D effects.

The following sections dive into the inner workings of MPI and how it is implemented. Note that even though the concept of MPI relies on the idea of a multi-planar image, in practice a multi-planar image is never actually created. This is in order to achieve a real-time implementation.

In the following, for the ease of understanding, the explanation around the main flow is revolved, and is being concentrated on the important parts which makes the present invention unique. Thus, all math and technicalities are omitted, as well as explanations of basic computer vision concepts.

On a top level, MPI is all about building a depth map. When one knows the depth of each pixel, all the necessary information to warp each pixel from the source images onto the target image is available.

The present MPI implementation includes the main steps "Reduce", Depth estimation", "Wrap perspective" and "Blend" as illustrated in figure 2. In the following, the steps will be discussed in detail.

The MPI implementation in this invention comprises four main steps: "Reduce," "Depth estimation," "Warp perspective," and "Blend," as illustrated in Figure 2. Below, each step is described in detail:

The first step, reduce, is downscaling and grayscaling the source images. This reduction is crucial because working with full-resolution, multi-channel images in real-time is computationally expensive. The downscaling reduces the data load while maintaining adequate accuracy for intermediate processing steps. This optional step can result in a performance increase of up to 12 times, with minimal loss in visual quality.

The next step is about depth estimation, which involves creating a depth map based on the reduced and grayscaled source images. A key feature of the invention is that the depth map is target-centered, meaning the depth information is calculated from the perspective of the target image rather than from the sources. This allows the process to avoid routing through source images, resulting in faster image synthesis. A key feature of the depth map is that it is partial, or incomplete. Hence, it is only the pixels that matter in the final output image that get assigned proper depths, while unimportant pixels can be assigned depths that are very wrong because, in the end, we do not care. Important pixels mean characteristic pixels in areas of edges and corners, and by unimportant pixels we mean pixels in flat, uniform areas. Thus, looking at the depth map with human eyes, it might not look like a traditional depth map at all, and uniform areas can look way too noisy to be useful for anything. But in the end, in those areas picking the correct pixel anyway will be done anyway, despite incorrect depth, because they are all the same pixels. This trick is an important part of how embodiments according to the present application manage to achieve fast image synthesis. The partial depth map is very cheap to make compared to a complete depth map and does not affect the final output image in a negative way.

This unique partial depth map is also what sets this invention apart from other depthmap based methods. We use the word "depth map" for lack of a better word, but it should be empathized that our depth map is not a generic depth map that can be used for multiple applications, but rather a specialized depth map and an intermediate representation used in this invention. This partial depth map is how this invention is able to do MPI image synthesis, without actually creating a costly MPI.

Further, once the depth map is generated, the original source images are warped to the target viewpoint. Pixels that are closer to the camera are warped more than those further away, which is implemented using an inverse warp of perspective. By mapping each pixel in the target image to corresponding pixels in the source images, a set of warped source images aligned with the target viewpoint is created.

In the final step, the set of warped images are blended together to form the target image. For regions where all sources have similar pixel values, blending weights are not significant. However, in areas of occlusion or where sources differ, user-defined weights are employed to decide which source image to prioritize. Generally, sources closer to the target are given higher weights, although this can vary based on the user's preferences, trajectory, or the quality of the source data.

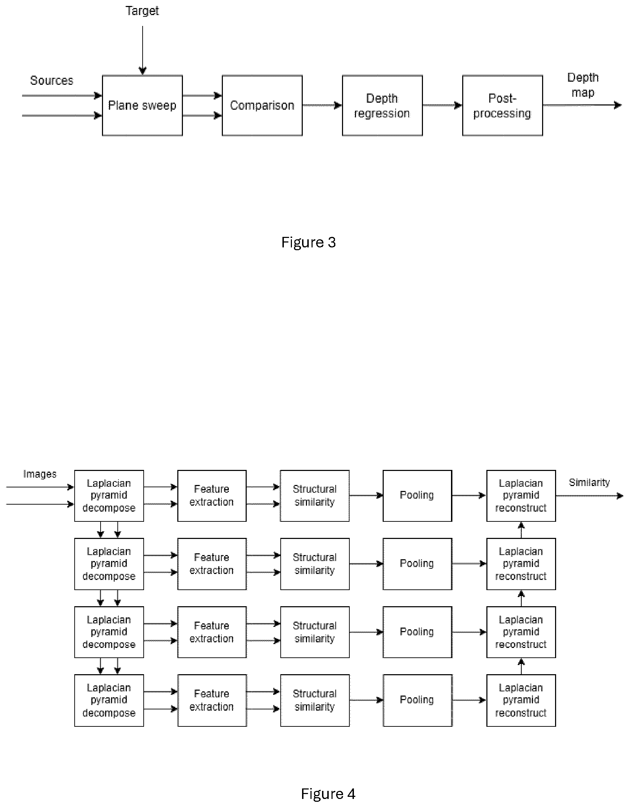

The depth estimation step, which is pivotal to the performance of the MPI implementation, is further detailed in Figure 3 and includes the following steps:
The first step is plane sweeping all the reduced and grayscaled sources images onto the target. Plane sweeping starts by defining multiple depths across which the scene is considered to be scattered. These depths may be named layers, and usually defined exponentially between a min and max depth. It is usually advantageously to place the layers exponentially because it is preferred to stack more layers closer to the camera where most of the perspective is happening. The user provides these layers to the algorithm, and they should be placed appropriately depending on the application and distances to what the user want to capture in the scene. Then, for each source the perspective to the target based on each layer/depth is warped. This produces a stack of warped images, which is usually referred to as a plane sweep volume, PSV.

The next step involves comparing all the plane sweep volumes from all the sources with each other. I.e. the nth layer of one PSV is compared with the nth layer of another PSV. This produces a similarity volume. The similarity volume represents how well a pixel belongs to a given layer/depth. Further details on how the comparison is done is outlined in the next section.

Given the similarity volume from the previous step, the most likely depth for each pixel can be interpreted. As an example, the simplest approach is to pick the depth that has the highest similarity for each pixel, however, more advanced depth regression techniques exists.

Finally, a post-processing step is optional, but it is common practice to do some type of post-processing on the depth map to remove noise and suppress false positives. The current implementation uses a bilateral filter as post-processing.

To achieve efficient depth estimation, the embodiments according to the present application utilize a novel similarity comparison process based on Laplacian pyramids, as depicted in Figure 4. The key steps are:
- Laplacian Pyramid Decomposition: Each image is decomposed into a Laplacian pyramid, capturing fine and large edges at different levels.
- Feature Extraction: Curvature, direction, and shape characteristics are extracted from the Laplacian pyramids using the Sobel operator to identify unique features.
- Structural Similarity Comparison: Feature maps are compared using the Structural Similarity Index, SSIM, to evaluate the correspondence between images at each depth layer.
- Pooling: A smoothing filter redistributes SSIM scores across patches for accurate comparison.
- Reconstruction: Finally, the Laplacian pyramid is reconstructed to form the final similarity map.

This method of comparing images ensures that depth estimation is accurate and computationally efficient, allowing for real-time processing of multi-planar images in video communication and other high-performance applications.

This detailed description highlights the unique features of the MPI implementation, which allows for real-time processing by focusing on efficient depth estimation and the avoidance of direct multi-planar image construction. The inventive approach offers a substantial improvement in processing speed and accuracy, particularly in applications involving complex depth data or multiple camera sensors.

It must be emphasized that the terminology "comprise/comprises" as used in this specification is chosen to specify the presence of stated features, numbers, steps or components, but does not preclude the presence or addition of one or more other functions, numbers, steps, components or groups thereof. It should also be noted that the word "a" or "an" preceding an element does not exclude the presence of a plurality thereof.

## Claims

1. A method for real-time image processing using multi-planar images in a multiple camera system, comprising:
Downscaling and grayscaling input images to reduce computational load;
Estimating a target-centered depth map by:
Sweeping multiple layers of depth across the downscaled and grayscaled input images to form a plane sweep volume, PSV,
Comparing corresponding layers of the PSV to generate a similarity volume, and
Selecting depth values for each pixel based on the similarity volume;
Warping the downscaled and grayscaled source images to a target viewpoint based on the estimated depth map;
Blending the warped images to generate a synthesized target image.

2. The method according to claim 1, wherein the depth map estimation comprises post-processing the depth map using a bilateral filter to remove noise and suppress false positives.

3. The method according to claim 1, wherein the similarity volume is generated using Laplacian pyramids, including:
Decomposing the downscaled and grayscaled input images into Laplacian pyramids to extract fine and large edges,
Comparing structural features using the Structural Similarity Index, SSIM, at multiple depth layers.

4. The method according to claim 1, wherein the blending step prioritizes source images closer to the target viewpoint, with customizable weights based on user preferences or data quality.

5. The method according to claim 1, wherein the warped images are blended to achieve transparency of obstructing foreground objects, enabling visibility of background scenes.

6. A system for real-time image processing using multi-planar images, comprising:
A plurality of cameras positioned to capture overlapping fields of view configured to provide input images;
A processing unit configured to:
Downscale and grayscale the input images,
Generate a target-centered depth map by:
Sweeping multiple layers of depth across the downscaled and grayscaled input images to form a plane sweep volume, PSV,
Comparing corresponding layers of the PSV to form a similarity volume,
Selecting depth values for pixels based on the similarity volume;
Warp the downscaled and grayscaled source images to a target viewpoint using the depth map;
Blend the warped images to synthesize a target image.

7. The system according to claim 6, further comprising a memory unit configured to store Laplacian pyramid data and similarity volumes for depth estimation.

8. The system according to claim 6, wherein the processing unit is further configured to post-process the depth map using noise-reduction filters.

9. The system according to claim 6, wherein the blending module in the processing unit is configured to handle occlusion and ensure seamless transitions in synthesized images by dynamically assigning blending weights.

10. The system according to claim 6, further comprising a user interface allowing customization of blending parameters, including prioritization of image sources and transparency levels.

## Patentansprüche

1. Verfahren zur Echtzeit-Bildverarbeitung unter Verwendung von multiplanaren Bildern in einem Mehrfachkamerasystem, umfassend:
Verkleinern und Grauskalieren von Eingabebildern, um Rechenlast zu reduzieren;
Schätzen einer zielzentrierten Tiefenkarte durch:
Sweepen von mehreren Tiefenschichten über die verkleinerten und grauskalierten Eingabebilder, um ein ebenes Sweep-Volumen, PSV, zu bilden,
Vergleichen von entsprechenden Schichten des PSV, um ein Ähnlichkeitsvolumen zu erzeugen, und
Auswählen von Tiefenwerten für jedes Pixel basierend auf dem Ähnlichkeitsvolumen;
Verzerren der verkleinerten und grauskalierten Quellbilder zu einem Zielsichtpunkt basierend auf der geschätzten Tiefenkarte;
Mischen der verzerrten Bilder, um ein synthetisiertes Zielbild zu erzeugen.

2. Verfahren nach Anspruch 1, wobei die Tiefenkartenschätzung Nachverarbeiten der Tiefenkarte unter Verwendung eines bilateralen Filters umfasst, um Rauschen zu entfernen und falsche Positive zu unterdrücken.

3. Verfahren nach Anspruch 1, wobei das Ähnlichkeitsvolumen unter Verwendung von Laplace-Pyramiden erzeugt wird, beinhaltend:
Zerlegen der verkleinerten und grauskalierten Eingabebilder in Laplace-Pyramiden, um feine und große Kanten zu extrahieren,
Vergleichen von Strukturmerkmalen unter Verwendung des Strukturähnlichkeitsindex, SSIM, in mehreren Tiefenschichten.

4. Verfahren nach Anspruch 1, wobei der Mischschritt Quellbilder näher an dem Zielsichtpunkt priorisiert, mit anpassbaren Gewichten basierend auf Benutzerpräferenzen oder Datenqualität.

5. Verfahren nach Anspruch 1, wobei die verzerrten Bilder gemischt werden, um Transparenz von blockierenden Vordergrundobjekten zu erreichen, was Sichtbarkeit von Hintergrundszenen ermöglicht.

6. System zur Echtzeit-Bildverarbeitung unter Verwendung von multiplanaren Bildern, umfassend:
eine Vielzahl von Kameras, die dazu positioniert ist, überlappende Sichtfelder zu erfassen, die dazu konfiguriert sind, Eingabebilder bereitzustellen;
eine Verarbeitungseinheit, die zu Folgendem konfiguriert ist:
Verkleinern und Grauskalieren der Eingabebilder,
Erzeugen einer zielzentrierten Tiefenkarte durch:
Sweepen von mehreren Tiefenschichten über die verkleinerten und grauskalierten Eingabebilder, um ein ebenes Sweep-Volumen, PSV, zu bilden,
Vergleichen von entsprechenden Schichten des PSV, um ein Ähnlichkeitsvolumen zu bilden,
Auswählen von Tiefenwerten für Pixel basierend auf dem Ähnlichkeitsvolumen;
Verzerren der verkleinerten und grauskalierten Quellbilder zu einem Zielsichtpunkt unter Verwendung der Tiefenkarte;
Mischen der verzerrten Bilder, um ein Zielbild zu synthetisieren.

7. System nach Anspruch 6, ferner umfassend eine Speichereinheit, die dazu konfiguriert ist, Laplace-Pyramidendaten und Ähnlichkeitsvolumen für Tiefenschätzung zu speichern.

8. System nach Anspruch 6, wobei die Verarbeitungseinheit ferner dazu konfiguriert ist, die Tiefenkarte unter Verwendung von Rauschreduktionsfiltern nachzuverarbeiten.

9. System nach Anspruch 6, wobei das Mischmodul in der Verarbeitungseinheit dazu konfiguriert ist, Okklusion handzuhaben und nahtlose Übergänge in synthetisierten Bildern durch dynamisches Zuweisen von Mischgewichten sicherzustellen.

10. System nach Anspruch 6, ferner umfassend eine Benutzerschnittstelle, die Anpassung von Mischparametern ermöglicht, beinhaltend Priorisierung von Bildquellen und Transparenzniveaus.

## Revendications

1. Procédé permettant le traitement d'image en temps réel à l'aide d'images multiplanaires dans un système à caméras multiples, comprenant :
la réduction d'échelle et la conversion en échelle de gris d'images d'entrée pour réduire la charge de calcul ;
l'estimation d'une carte de profondeur centrée sur cible par :
le balayage de multiples couches de profondeur à travers les images d'entrée réduites en échelle et converties en échelle de gris pour former un volume de balayage plan, PSV,
la comparaison des couches correspondantes du PSV pour générer un volume de similarité, et
la sélection de valeurs de profondeur pour chaque pixel sur la base du volume de similarité ;
le gauchissement des images sources réduite en échelle et converties en échelle de gris à un point de vue cible sur la base de la carte de profondeur estimée ;
le mélange des images gauchies pour générer une image cible synthétisée.

2. Procédé selon la revendication 1, ladite estimation de carte de profondeur comprenant le post-traitement de la carte de profondeur à l'aide d'un filtre bilatéral pour éliminer le bruit et supprimer les faux positifs.

3. Procédé selon la revendication 1, ledit volume de similarité étant généré à l'aide de pyramides laplaciennes, comprenant :
la décomposition des images d'entrée réduites en échelle réduite et converties en échelle de gris en pyramides laplaciennes pour extraire les bords fins et larges,
la comparaison des caractéristiques structurelles à l'aide de l'indice de similarité structurelle, SSIM, au niveau de multiples couches de profondeur.

4. Procédé selon la revendication 1, ladite étape de mélange donnant la priorité aux images source plus proches du point de vue cible, avec des pondérations personnalisables sur la base de préférences d'utilisateur ou de la qualité des données.

5. Procédé selon la revendication 1, lesdites images gauchies étant mélangées pour obtenir la transparence des objets de premier plan faisant obstacle, permettant la visibilité des scènes d'arrière-plan.

6. Système permettant le traitement d'image en temps réel à l'aide d'images multiplanaires, comprenant :
une pluralité de caméras positionnées pour capturer des champs de vision se chevauchant configurés pour fournir des images d'entrée ;
une unité de traitement configurée pour :
réduire l'échelle et convertir en échelle de gris des images d'entrée,
générer une carte de profondeur centrée sur la cible par :
le balayage de multiples couches de profondeur à travers les images d'entrée réduites en échelle et converties en échelle de gris pour former un volume de balayage plan, PSV,
la comparaison des couches correspondantes du PSV pour former un volume de similarité,
la sélection de valeurs de profondeur pour les pixels sur la base du volume de similarité ;
gauchir des images sources réduites en échelle et converties en échelle de gris à un point de vue cible à l'aide de la carte de profondeur ;
mélanger des images gauchies pour synthétiser une image cible.

7. Système selon la revendication 6, comprenant en outre une unité de mémoire configurée pour stocker des données de pyramide laplacienne et des volumes de similarité pour l'estimation de profondeur.

8. Système selon la revendication 6, ladite unité de traitement étant en outre configurée pour post-traiter la carte de profondeur à l'aide de filtres de réduction de bruit.

9. Système selon la revendication 6, ledit module de mélange dans l'unité de traitement étant configuré pour gérer l'occlusion et assurer des transitions continues dans des images synthétisées en attribuant dynamiquement des poids de mélange.

10. Système selon la revendication 6, comprenant en outre une interface utilisateur permettant la personnalisation des paramètres de mélange, notamment la priorisation des sources d'image et les niveaux de transparence.
